# EUROPEAN PATENT APPLICATION

(11) **EP 4 439 748 A1**
(43) Date of publication of application: **02.10.2024**
(21) Application number: 23206856.9
(22) Date of filing: 30.10.2023
(51) Int. Cl.: H01M 10/04, H01M 10/0587, H01M 50/107, H01M 50/152, H01M 50/169, H01M 50/171, H01M 50/342, H01M 50/531, H01M 50/645

(54) **SECONDARY BATTERY**

(30) Priority: 15.11.2022 KR 20220152408
(71) Applicant: Samsung SDI Co., Ltd., Yongin-si, Gyeonggi-do 17084 (KR)
(72) Inventor: KO, Sung Gwi, 17084 Yongin-si (KR); PARK, Gun Gue, 17084 Yongin-si (KR)
(74) Representative: Marks & Clerk LLP

(57) **Abstract**

A secondary battery includes: an electrode assembly; a can having an open upper end and accommodating the electrode assembly; and a cap plate coupled to the upper end of the can and having a welding portion welded in contact with an upper end of the electrode assembly.

## Description

### BACKGROUND

### 1. Field

Aspects of embodiments of the present disclosure relate to a secondary battery.

### 2. Description of the Related Art

Unlike a primary battery that is not designed to be charged, a secondary battery is a battery that is designed to be charged and discharged. Low-capacity secondary batteries are used in small, portable electronic devices, such as smart phones, feature phones, tablet computers, notebook computers, digital cameras, or camcorders, while large-capacity secondary batteries in the form of a module in which dozens to hundreds of battery packs are connected together are widely used as power sources for driving motors in hybrid vehicles and electric vehicles and for power storage devices (e.g., home- and utility-scale power storage).

Secondary batteries can be classified as cylindrical, prismatic, pouch-shaped, etc. according to their external appearance. From among these secondary batteries, a cylindrical secondary battery generally includes an electrode assembly, a can, a cap assembly, etc., and has a structure in which the electrode assembly is inserted into the can, a bead (e.g., a beading part) is then formed onto which the cap assembly is placed on, and a crimp (e.g., a crimping part) is then formed to fix the cap assembly.

The above information disclosed in this Background section is for enhancement of understanding of the background of the present disclosure, and therefore, it may contain information that does not constitute prior art.

### SUMMARY

Embodiments of the present disclosure provide a secondary battery having increased battery capacity.

In addition, embodiments of the present disclosure provide a reduced cost secondary battery.

A secondary battery, according to an embodiment of the present disclosure, includes: an electrode assembly; a can having an open upper end and accommodating the electrode assembly; and a cap plate coupled to the upper end of the can and having a welding portion welded in contact with an upper end of the electrode assembly.

The welding portion may be concavely recessed from the cap plate toward an inside of the can.

When the cap plate is coupled to the can, a bottom surface of the welding portion may be lower than the upper end of the electrode assembly.

The welding portion may extend radially from a center of the cap plate.

A portion of the welding portion may have a smaller diameter than a length of the welding portion extending from the center of the cap plate, and the portion of the welding portion may be concavely recessed toward an inside of the can.

The cap plate may have a notch as a safety vent.

The notch may extend along a circumference of the cap plate outside the welding portion.

The notch may be in an inner surface of the cap plate.

The electrode assembly may be wound and may have a hollow center. The cap plate may have an injection opening at a center thereof with a plug installed in the injection opening and extending to be inside the hollow center of the electrode assembly.

The upper end of the can may have a step, and the cap plate may be seated on the step.

At least some of the above and other features of the invention are set out in the claims.

### BRIEF DESCRIPTION OF DRAWINGS

FIG. 1 is a cross-sectional view of a secondary battery according to an embodiment of the present disclosure.
FIG. 2 is an enlarged view of the portion II in FIG. 1.
FIG. 3 is a perspective cross-sectional view of the secondary battery shown in FIG. 1.
FIG. 4 is a plan view of a cap plate of a secondary battery according to an embodiment of the present disclosure.
FIG. 5 is a bottom view of a cap plate of a secondary battery according to an embodiment of the present disclosure.
FIG. 6 illustrates steps of a process of assembling a secondary battery according to an embodiment of the present disclosure.

### DETAILED DESCRIPTION

Hereinafter, embodiments of the present disclosure will be described, in detail, with reference to the accompanying drawings. Embodiments of the present disclosure are provided to more completely describe the present disclosure to those skilled in the art, and the following embodiments may be modified in various other forms. Further, the present disclosure may be embodied in many different forms and should not be construed as being limited to the embodiments described herein. Rather, these embodiments are provided so that this disclosure will be thorough and complete and will fully convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

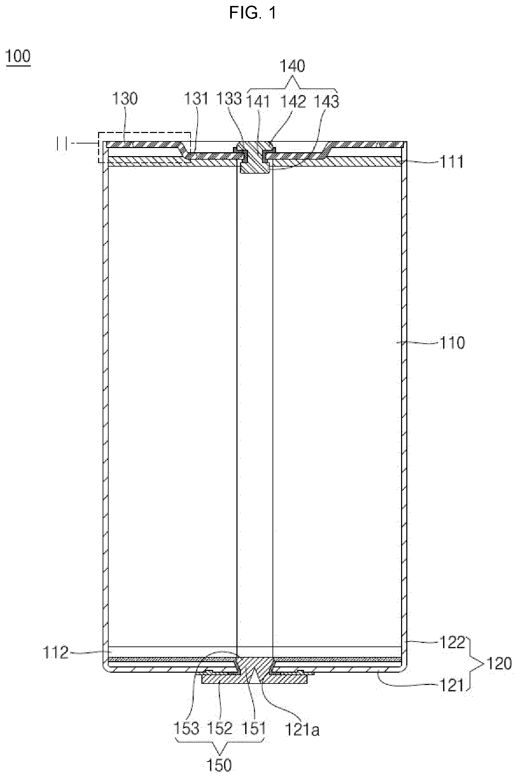

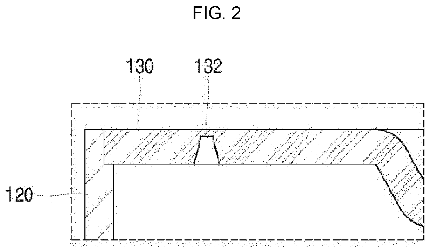

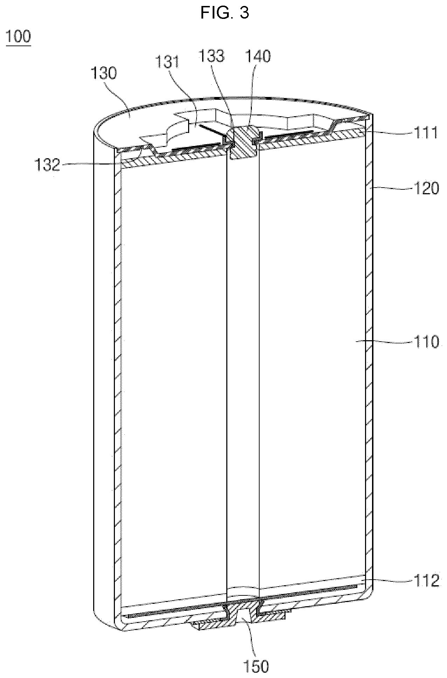

FIG. 1 is a cross-sectional view of a secondary battery 100 according to an embodiment of the present disclosure, FIG. 2 is an enlarged view of the portion II in FIG. 1, and FIG. 3 is a perspective cross-sectional view of the secondary battery 100 shown in FIG. 1.

Referring to FIGS. 1 to 3, the secondary battery 100, according to an embodiment of the present disclosure, includes an electrode assembly 110, a can 120, a cap plate 130, a plug 140, and a terminal 150.

The electrode assembly 110 includes a first electrode plate, a second electrode plate, and a separator.

The first electrode plate may be any one of a negative electrode plate and a positive electrode plate. When the first electrode plate is a negative electrode plate, the first electrode plate may include a current collector plate (e.g., a negative electrode current collector plate) made of a thin conductive metal plate, such as copper or nickel foil or mesh, and may have a coated portion (e.g., a negative electrode coated portion) at where an active material (e.g., a negative electrode active material) is coated and an uncoated portion (e.g., a negative electrode uncoated portion) 111 at where the negative electrode active material is not coated. The negative electrode active material may include, for example, a carbon-based material, silicon (Si), tin (Sn), tin oxide, a tin alloy composite, a transition metal oxide, lithium metal nitrite, or a metal oxide.

The second electrode plate may be the other one of the negative electrode plate and the positive electrode plate. When the second electrode plate is a positive electrode plate, the second electrode plate may include a current collector plate (e.g., a positive electrode current collector plate) made of a thin conductive metal plate, such as aluminium foil or mesh, and may have a coated portion (e.g., a positive electrode coated portion) at where an active material (e.g., a positive electrode active material) is coated and an uncoated portion (e.g., a positive electrode uncoated portion) 112 at where the positive electrode active material is not coated. The positive electrode active material may include a chalcogenide compound, for example, a complex metal oxide, such as LiCoO₂, LiMn₂O₄, LiNiO₂, or LiNiMnO₂.

The separator is interposed between the first electrode plate and the second electrode plate to prevent a short circuit between the first electrode plate and the second electrode plate. The separator may be made of, for example, polyethylene, polypropylene, or a porous copolymer of polyethylene and polypropylene.

The electrode assembly 110 is formed by stacking the first electrode plate, the separator, and the second electrode plate in that order such that the uncoated portion 111 of the first electrode plate is aligned on (or protrudes from) one side (e.g., the upper side in the drawing), and the uncoated portion 112 of the second electrode plate is aligned on (or protrudes from) the opposite side (e.g., the lower side in the drawing), and is wound to have a hollow center.

The can 120 may be formed in a cylindrical shape. For example, the can 120 has a bottom 121 formed in a disk shape and a side surface 122 extending upwardly from an edge of the bottom 121. Because the upper end of the can 120 is open, the electrode assembly 110 is inserted into the inside of the can 120 through the upper end of the can 120, and the upper end of the can 120 can then be closed by the cap plate 130.

The can 120 has a hole 121a at a center of the bottom 121 through which the terminal 150 is installed. In addition, the bottom 121 and the side surface 122 of the can 120 may be integrally formed and may be made of, for example, steel, a steel alloy, aluminium, or an aluminium alloy.

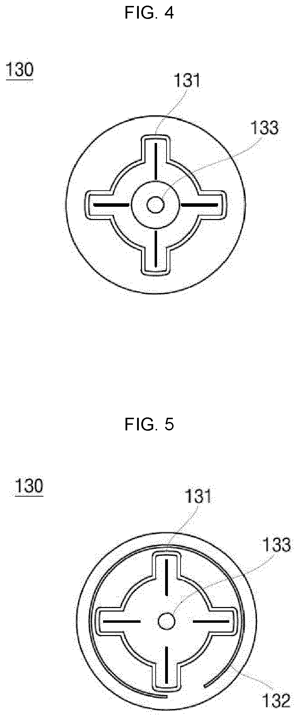

FIG. 4 is a plan view of a cap plate 130 of a secondary battery 100 according to an embodiment of the present disclosure, and FIG. 5 is a bottom view of the cap plate 130 shown in FIG. 4.

Referring to FIGS. 4 and 5, the cap plate 130 is formed in a disk shape corresponding to the upper end of the can 120 to be coupled to the upper end of the can 120. A step may be formed on the inner diameter side of the upper end of the can 120 so that the cap plate 130 can be more stably coupled to the upper end of the can 120, and the cap plate 130 may be seated on the step (see, e.g., FIG. 2). After coupling the cap plate 130 to the can 120, welding is performed along the boundary between the cap plate 130 and the can 120 to fix the cap plate 130 and the can 120.

In addition, the cap plate 130 includes a welding portion 131, a notch 132, and an injection opening 133.

The welding portion 131 is welded in direct contact with the uncoated portion 111 of the first electrode plate of the electrode assembly 110. A region of the cap plate 130 other than the welding portion 131 may be spaced apart from the electrode assembly 110.

The welding portion 131 may be formed by being concavely recessed from the cap plate 130 toward the inside of the can 120. For example, the welding portion 131 may be formed such that the bottom surface of the welding portion 131, when the cap plate 130 is coupled to the can 120, is located, for example, in a range of about 0.1 mm to about 0.2 mm lower than a point (that is, a level or height) at where the upper end of the uncoated portion 111 is located when the electrode assembly 110 is accommodated in the can 120. In other words, when the cap plate 130 is coupled after the electrode assembly 110 is inserted into the can 120, the welding portion 131 contacts the uncoated portion 111 of the first electrode plate by lightly pressing the same. Accordingly, the welding portion 131 is in close contact with and electrically connected to the uncoated portion 111 of the first electrode plate.

In addition, the welding portion 131 may radially extend from the center of the cap plate 130. Accordingly, the cap plate 130 and the electrode assembly 110 may be fixed by performing welding along the direction in which the welding portion 131 extends from the outside of the cap plate 130 (e.g., in a radial direction). In the drawing, the welding portion 131 is illustrated as being formed in a cross shape so that welding can be performed linearly in four places (see the portion indicated by thick solid lines in FIGS. 4 and 5), but the number and shape thereof can be appropriately varied. For example, the welding portion 131 may radially extend in three branches on the basis of the center of the cap plate 130 so that welding can be performed at three locations.

Referring to the drawing, a region having a smaller diameter than the length of the welding portion 131 extending at the center of the cap plate 130 and concavely recessed together with the welding portion 131 can be seen. Through this region, a wider contact area (e.g., a conducting area) between the cap plate 130 and the electrode assembly 110 can be secured. In the drawing, the upper region is illustrated as being formed in a circular shape, but the shape may be appropriately changed. For example, the area may be formed in a rectangular shape.

The notch 132 acts as a safety vent. For example, when gas is generated inside the can 120, the notch 132 may spontaneously burst due to the resulting pressure to release the gas and pressure, thereby preventing an explosion.

The notch 132 may be formed along the circumference of the cap plate 130 outside the welding portion 131. Therefore, because the notch 132 does not interfere with the welding portion 131, the function thereof can perform as intended. In addition, when the notch 132 bursts, a relatively wide rupture area is formed, and thus, gas and pressure can be rapidly released from the can 120.

In addition, the notch 132 may be formed in an inner surface of the cap plate 130. Accordingly, the notch 132 may not be unintentionally damaged or corroded by external factors.

The injection opening 133 is for injecting electrolyte into the can 120 after coupling the cap plate 130 to the can 120 and may be formed at the center of the cap plate 130.

The plug 140 is for sealing the injection opening 133 after injecting the electrolyte solution into the can 120 and may be installed by riveting. The plug 140 includes a shank 141 extending through the injection opening 133, a head 142 disposed on one end of the shank 141 and formed larger than the injection opening 133 and supported on the outer surface of the cap plate 130, and a bucktail 143 supported on the inner surface of the cap plate 130 by having the other end of the shank 141 deformed to be larger than the injection opening 133.

When the plug 140 is installed into the injection opening 133, the bucktail 143 is positioned inside the hollow of the electrode assembly 110. Accordingly, a separate space for the bucktail 143 need not be provided inside the can 120, and the secondary battery 100 can be designed more compactly as a whole.

The terminal 150 is installed in the hole 121a in the bottom 121 of the can 120 and is electrically connected to the uncoated portion 112 of the second electrode plate of the electrode assembly 110.

The terminal 150 may also be installed by riveting. Therefore, similar to the plug 140, the terminal 150 may include a shank 151 extending through the hole 121a, a head 152 disposed at one end of the shank 151, formed to be larger than the hole 121a, and supported on the outer surface of the bottom 121 of the can 120, and a bucktail 153 deformed to be larger than the hole 121a to be supported on the inner surface of the bottom 121 of the can 120 and in contact with the uncoated portion 112 of the second electrode plate of the electrode assembly 110.

Furthermore, an insulating member may be installed between the can 120 and the terminal 150 to electrically insulate the same from each other.

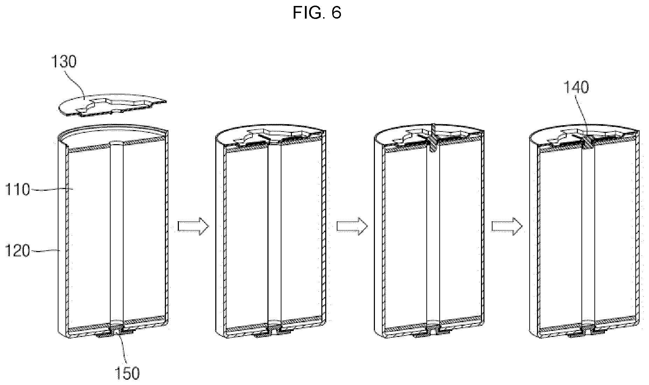

FIG. 6 illustrates steps of a process of assembling a secondary battery according to an embodiment of the present disclosure.

Referring to FIG. 6, in a state in which the terminal 150 is installed in the can 120, the electrode assembly 110 is inserted into the can 120, and the cap plate 130 is then coupled to the can 120 are shown. Here, the cap plate 130 may be stably coupled by being seated on the step at the upper end of the can 120.

Next, the can 120 and the cap plate 130 are welded along the boundary therebetween to fix the cap plate 130 to the can 120. Further, welding is performed from the outside of the cap plate 130 along the direction in which the welding portion 131 extends to fix the cap plate 130 to the electrode assembly 110. The fixing of the cap plate 130 to the can 120 and to the electrode assembly 110 may be performed in any order. For example, the cap plate 130 may first be welded to the can 120 and then welded to the electrode assembly 110, may first be welded to the electrode assembly 110 and then welded to the can 120, or may be almost concurrently (or simultaneously) welded to the can 120 and the electrode assembly 110.

Then, an electrolyte may be injected into the can 120 through the injection opening 133 in the cap plate 130, and the plug 140 may then be installed in the injection opening 133 to finish to secondary battery 100.

As described above, in the secondary battery according to embodiments of the present disclosure, by welding the cap plate in direct contact with the electrode assembly, the beading part and the crimping part present in a conventional secondary battery can be omitted. Accordingly, the space inside the can conventionally used to form the beading part and the crimping part can be further allocated for the electrode assembly, and thus, the battery capacity can be improved. In addition, because the beading part and the crimping part are not formed, not only the process time can be shortened but also cost reduction can be achieved.

The foregoing embodiments are only some embodiments for carrying out the secondary battery according to the present disclosure, which is not limited to the embodiment. It will be understood by a person skilled in the art that various changes in form and details may be made therein without departing from the scope of the present disclosure as defined by the following claims and their equivalents.

## Claims

1. A secondary battery comprising:
an electrode assembly;
a can having an open upper end and accommodating the electrode assembly; and
a cap plate coupled to the upper end of the can and having a welding portion welded in contact with an upper end of the electrode assembly.

2. The secondary battery of claim 1, wherein the welding portion is concavely recessed from the cap plate toward an inside of the can.

3. The secondary battery of claim 2, wherein, when the cap plate is coupled to the can, a bottom surface of the welding portion is lower than the upper end of the electrode assembly.

4. The secondary battery of any one of claims 1 to 3, wherein the welding portion extends radially from a center of the cap plate.

5. The secondary battery of claim 4, wherein a portion of the welding portion has a smaller diameter than a length of the welding portion extending from the center of the cap plate, and
wherein the portion of the welding portion is concavely recessed toward an inside of the can.

6. The secondary battery of any one of claims 1 to 5, wherein the cap plate has a notch as a safety vent.

7. The secondary battery of claim 6, wherein the notch extends along a circumference of the cap plate outside the welding portion.

8. The secondary battery of claim 6 or claim 7, wherein the notch is in an inner surface of the cap plate.

9. The secondary battery of any one of claims 1 to 8, wherein the electrode assembly is wound and has a hollow center, and
wherein the cap plate has an injection opening at a center thereof with a plug installed in the injection opening and extending to be inside the hollow center of the electrode assembly.

10. The secondary battery of any one of claims 1 to 9, wherein the upper end of the can has a step, and
wherein the cap plate is seated on the step.
